# EUROPÄISCHE PATENTSCHRIFT

(11) **EP 0 761 285 B1**
(45) Veröffentlichungstag und Bekanntmachung des Hinweises auf die Patenterteilung: **17.11.1999**
(21) Anmeldenummer: 96112596.0
(22) Anmeldetag: 03.08.1996
(51) Int. Cl.: B01D 53/32

(54) **Verfahren zur Reinigung von Gasen**
Process for purifying gases
Procédé pour la purification de gaz

(30) Priorität: 30.08.1995 DE 19531707
(43) Veröffentlichungstag der Anmeldung: 12.03.1997
(73) Patentinhaber: Degussa-Hüls Aktiengesellschaft, 60287 Frankfurt am Main (DE)
(72) Erfinder: Lehmann, Thomas, Dr., 63505 Langenselbold (DE); Engel, Dieter, Dr., 79618 Rheinfelden (DE); Sanzenbacher, Rainer, 63571 Gelnhausen (DE)

(56) Entgegenhaltungen:
- DE-A- 2 901 577

## Beschreibung

Die Erfindung richtet sich auf ein Verfahren zur Reinigung von Gasen durch elektrolytische Entfernung einer Verunreinigung aus dem Gas unter Verwendung einer Elektrolysezelle mit einer Festbettelektrode.

Gasförmige Schadstoffe oder Verunreinigungen in Gasen, wie zum Beispiel Cl₂, SO₂, NOₓ, können durch eine naßchemische Wäsche mit einer Waschlösung entfernt werden. Für eine derartige Reinigung werden Absorptionsapparate, wie beispielsweise Füllkörperkolonnen, eingesetzt. Um eine gute Reinigungswirkung zu erzielen, muß die absorbierte Gaskomponente schnell umgesetzt werden. Nachteilig ist das Erfordernis, geeignete Chemiekalien einsetzen zu müssen. Zudem wird durch das in der Waschlösung gebildete Reaktionsprodukt aus einem Abgasproblem vielfach ein Abwasserproblem.

Bekannt sind auch Verfahren zur elektrochemischen Abgasreinigung. Bei den sogenannten 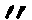 outer-cell"-Verfahren wird die abzureichernde Gaskomponente eines Abgases zunächst in einer Absorptionskolonne in einer Waschlösung absorbiert; anschließend wird die Waschlösung in einer nachgeschalteten Elektrolysezelle kathodisch reduziert oder anodisch oxidiert. Diese Anordnung erfordert zwei Apparate, nämlich einen solchen zur Absorption und einen solchen zur Elektrolyse. Vorteilhafter sind die sogenannten 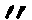 innercell"-Verfahren, wobei Absorption und elektrochemische Umsetzung in einem Reaktor, nämlich einer Elektrolysezelle, erfolgen. Bei den sogenannten 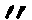 indirekten" Elektrolyseprozessen wird das bei einer naßchemischen Abgasbehandlung eingesetzte Oxidations- oder Reduktionsmittel durch Elektrolyse der gebrauchten Waschlösung regeneriert.

Ein 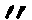 inner-cell"-Verfahren, das sich zur oxidativen oder reduktiven elektrolytischen Abgasreinigung eignet, lehren G. Kreysa et al. in Ger. Chem. Eng. 6 (1983) 325-336: Das zu reinigende Gas wird in einer als Festbettelektrode ausgebildeten Absorptionskolonne mit einer elektrolytisch leitenden Waschflüssigkeit in Kontakt gebracht. Die Absorptionskolonne enthält eine Schüttung aus leitfähigen Füllkörpern. Das zu reinigende Gas und die Waschflüssigkeit können im Gleichstrom oder im Gegenstrom durch die Kolonne geführt werden. In beiden Fällen soll ein stabiles Zweiphasengemisch (Gas/Flüssigkeit) durch die Kolonne strömen. Die Kolonne soll stets geflutet sein, und ein Abreißen der Flüssigkeitsströmung soll vermieden werden. Kreysa et al. zeigen, daß unter den angegebenen Bedingungen ein 5000 ppm Chlor enthaltendes Abgas unter Verwendung einer K₂SO₄-Katholytlösung und einem Strom von 15 A auf 50 ppm Chlor abgereichert werden kann. Ein 0,8 Vol.-% SO₂ enthaltendes Gas konnte durch anodische Oxidation auf 200 ppm SO₂ abgereichert werden.

Das zuvor gewürdigte Verfahren sowie verschiedene Ausführungsformen hierfür geeigneter Elektrolysezellen lehrt Kreysa in der DE-OS 29 01 577. Eine solche Zelle weist durch ein Diaphragma getrennte Elektrodenräume mit den zugeordneten Elektroden auf, wobei mindestens eine Elektrode als Festbettelektrode ausgebildet ist. Es können auch mehrere Anoden und Kathoden filterpressenartig zusammengefaßt sein. Innerhalb einer größeren Festbettelektrode können auch mehrere Gegenelektroden mit Gegenelektrodenräumen und Diaphragmen angeordnet sein.

Nachteilig an dem Verfahren von Kreysa et al. ist der hohe Restgehalt an Verunreinigungen im gereinigten Gas. Im Falle von Chlor liegt der Restgehalt etwa eine Zehnerpotenz oberhalb des beispielsweise in Deutschland zulässigen Grenzwerts von 5 ppm. Bei dem beschriebenen Verfahren zur Reinigung eines chlorhaltigen Gases fallt zudem eine K₂SO₄ enthaltende Salzsäure an, welche entsorgt werden muß. Gemäß DE-OS 29 01 577 kann allerdings auch eine wäßrige HCl-Lösung als Katholyt eingesetzt werden.

Aufgabe der Erfindung ist demgemäß, ein verbessertes Verfahren zur Entfernung von gasförmigen Verunreinigungen aus Gasen aufzuzeigen, das die Nachteile des gattungsgemäßen vorbekannten Verfahrens nicht aufweist. Insbesondere sollte das Verfahren zu einem besseren Reinigungsgrad führen und den Erhalt einer den gesetzlichen Vorschriften entsprechenden Restkonzentration an Schadstoffen erlauben. Das Verfahren sollte einfach handhabbar sein und keinen größeren technischen Aufwand erforderlich machen als das vorbekannte Verfahren.

Gefunden wurde ein Verfahren zur elektrolytischen Entfernung einer Verunreinigung aus Gasen, wobei das Gas und ein flüssiger Elektrolyt im Gleich- oder Gegenstrom über eine Festbettelektrode einer Elektrolysezelle, welche eine durch einen Separator von der Festbettelektrode getrennte Gegenelektrode und Gegenelektrodenraum aufweist, geführt werden und die Verunreinigung bei einer wirksamen Zellspannung elektrochemisch umgewandelt wird, das dadurch gekennzeichnet ist, daß man die Festbettelektrode als Rieselbettreaktor betreibt, wobei man die Berieselungsdichte und die entgegenströmende Menge Gas derart aufeinander abstimmt, daß es zu keiner Flutung kommt.

Die Unteransprüche richten sich auf bevorzugte Ausführungsformen des Verfahrens.

Mit dem erfindungsgemäßen Verfahren können solche Gase gereinigt werden, welche unter den elektrolytischen Bedingungen oxidierbare oder reduzierbare Verunreinigungen enthalten. Reduzierbare Verunreinigungen, wie Halogene und insbesondere Chlor, lassen sich nahezu quantitativ aus dem Gas abtrennen, indem diese über ein als Festbettkathode ausgebildetes Festbett geleitet werden und ein wäßriger Katholyt, insbesondere eine wäßrige Halogenwasserstoffsäure, über dieses Festbett rieselt; an der Anode bildelt sich aus einem dort befindlichen wäßrigen Anolyten Sauerstoff. Oxidierbare Verunreinigungen, wie beispielsweise Schwefeldioxid, Stickoxide (NOₓ) und oxidierbare organische Verbindungen, wie beispielsweise Formaldehyd, lassen sich aus damit verunreinigten Gasen entfernen, indem das Gas und ein Anolyt über eine Festbettanode geleitet werden. Die aus dem Gas zu entfernenden Verunreinigungen müssen zumindest teilweise in dem über das Festbett rieselnden Elektrolyten löslich und elektrochemisch umsetzbar sein.

Es ist ein erfindungswesentliches Merkmal, daß der die Verunreinigung des Gases absorbierende Elektrolyt über die Festbettelektrode rieselt. Die Festbettelektrode wird also in Form eines Rieselbetts (trickle bed) betrieben. Während Kreysa et al. (Ger. Chem. Eng. 6 (1983) 325-336, insbesondere Seite 329) ausdrücklich lehren, während der Elektrolyse innerhalb der Festbettelektrode eine stabile Zweiphasenströmung aufrecht und damit die Festbettelektrode in geflutetem Zustand zu halten, wird erfindungsgemäß die Festbettelektrode stets im nicht-gefluteten Zustand betrieben. Der Elektrolyt bildet auf den Partikeln der Festbettelektrode einen Flüssigkeitsfilm mit einer großen Austauschfläche. Aufgrund dieser vergrößerten Austauschfläche wird der Stoffaustausch zwischen der Flüssigkeit und den Verunreinigungen des Gases verbessert und dadurch ein wesentlich höherer Reinigungsgrad des Gases erzielt. Durch den Betrieb der Festbettelektrode als Rieselbett beträgt der Druckverlust im Rieselbett nur einen Bruchteil desjenigen der beim Betrieb einer gefluteten Festbettelektrode überwunden werden muß.

Das zu reinigende Gas und der die Verunreinigungen absorbierende Elektrolyt können entweder im Gleichstrom oder im Gegenstrom über die Festbettelektrode geleitet werden. In jedem Fall rieselt aber der Elektrolyt von oben nach unten durch die Elektrodenschüttung. Besonders bevorzugt werden Gas und Elektrolye im Gegenstrom geführt. Hierbei werden die Berieselungsdichte (Menge Elektrolyt pro Querschnittsfläche und Stunde) und die entgegenströmende Menge Gas derart aufeinander abgestimmt, daß es zu keiner Flutung kommt.

Das erfindungsgemäße Verfahren wird in einer Elektrolysezelle durchgeführt, die eine Anode, einen Separator zwischen der Kathode und Anode sowie einen Kathodenraum und Anodenraum aufweist. Zumindest eine der Elektroden ist als Festbett, das sich in dem entsprechenden Elektrodenraum befindet, ausgebildet. Die Elektrolysezelle mit einer Festbettelektrode kann in für Elektrolysezellen allgemein üblicher Form, insbesondere rohr- oder plattenförmig, ausgebildet sein. Bei einer rohrförmigen Ausbildung befindet sich vorzugsweise eine Elektrode mit ihrem Elektrodenraum und einem Separator im Zentrum einer die Festbettelektrode bildenden Schüttung leitfähiger Partikel. Anstelle einer einzigen Gegenelektrode im Zentrum einer Schüttung mit größerem Querschnitt können sich in ihr auch mehrere Gegenelektroden mit dem jeweiligen Elektrodenraum und Separator röhren- oder taschenförmig angeordnet sein; die Gegenelektroden sind untereinander elektrisch kurzgeschlossen. Wie dies auch aus der DE-OS 29 01 577 bekannt ist, lassen sich auch mehrere plattenförmige Elektrolysezellen zusammenfassen.

Zur Entfernung von oxidierbaren und reduzierbaren Gasverunreinigungen kann das zu reinigende Gas hintereinander durch eine Elektrolysezelle mit einer Festbettkathode und anschließend eine Elektrolysezelle mit einer Festbettanode geleitet werden. Die zuletzt genannten beiden Elektrolysenzellen können aber auch in Form einer dipolaren Filterpresseneinheit zusammengefaßt werden - hierbei sind die anodische Festbettelektrode und die kathodische Festbettelektrode durch Diaphragmen von einer dipolar arbeitenden Gegenelektrode getrennt.

Die Kontaktierung der Festbettelektrode kann über Kontaktierstäbe, Kontaktiergitter oder Kontaktierplatten oder eine Kombination derartiger Kontaktiervorrichtungen erfolgen. Sofern die Festbettelektrode in Form eines Zylinders mit rundem Querschnitt ausgebildet ist, ist es zweckmäßig, die Kontaktierung über eine zylindermantelförmige Kontaktelektrode auszuführen. Geeignete Materialien für die Kontaktierung sind Ta, Zr, Nb und insbesondere Ti.

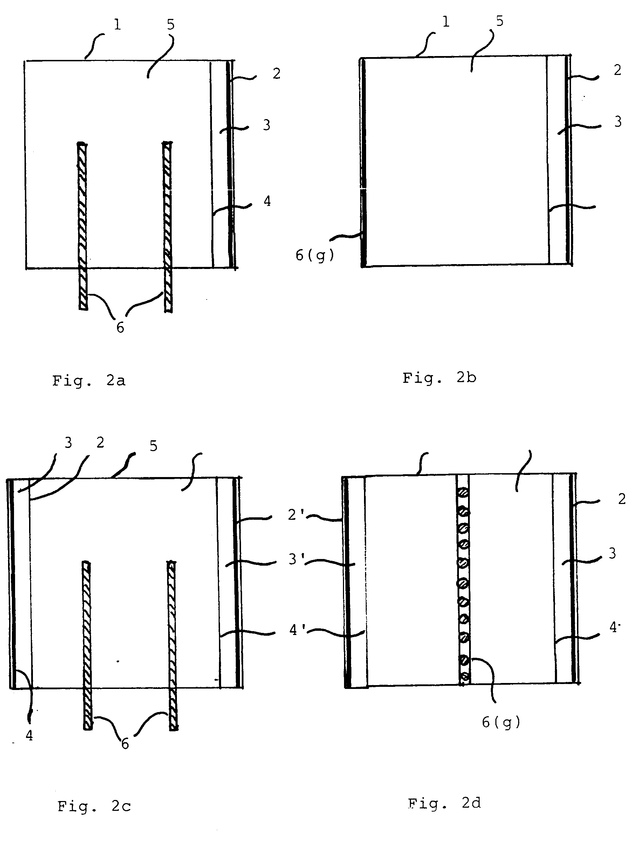

Die später beschriebenen Figuren 2a bis 2d zeigen vier verschiedene Strukturen einer Elektrolysezelle mit unterschiedlichen Kontaktiervorrichtungen. Es wurde festgestellt, daß bei Elektrolysezellen, deren Gegenelektrode flächig ausgebildet ist, eine Festbettelektrode mit einer gegenüberliegenden flächigen oder netzförmigen Kontaktierung vorteilhafter ist als eine Kontaktierung mittels Kontaktierstäben.

Eine besonders bevorzugte Ausbildungsform einer erfindungsgemäß zu verwendenden Elektrolysezelle - siehe Figur 2c und 2d - umfaßt eine Festbettelektrode mit rechteckigem Querschnitt, welche an zwei gegenüberliegenden Längsseiten jeweils eine durch ein Diaphragma abgetrennte Gegenelektrode mit dem Gegenelektrodenraum aufweist; die beiden Gegenelektroden sind elektrisch kurzgeschlossen. Bei der zuletzt dargestellten Ausführungsform ist es besonders zweckmäßig, zur Kontaktierung der Festbettelektrode innerhalb der Festbettelektrode und im wesentlichen parallel zu den einander gegenüberliegenden Gegenelektroden ein Gitter aus einem unter den Elektrolysebedingungen korrosionsstabilen Metall anzuordnen.

Bei der Festbettelektrode handelt es sich um eine Schüttung von Füllkörpern aus einem korrosionsstabilen Material, insbesondere einem Metall, Graphit oder elektrisch leitend überzogenen Nichtleiter. Die Auswahl des Materials für die Festbettelektrode richtet sich nach der Korrosionsbeständigkeit des Materials unter den Elektrolysebedingungen sowie der Beständigkeit des Materials gegenüber Bestandteilen des zu reinigenden Gases. Als Festbettkathode sind vorzugsweise Füllkörper aus Graphit oder einem Ventilmetall, insbesondere Tantal und Titan, geeignet. Als Festbettanode eignen sich insbesondere Füllkörper auf der Basis von Graphit sowie Edelmetallen. Für die Festbettelektrode können im wesentlichen alle aus der Absorptionstechnik gebräuchlichen Füllkörper verwendet werden, soweit diese die erforderliche Leitfähigkeit und eine ausreichend hohe volumenspezifische Oberfläche aufweisen und korrosionsbeständig sind. Gebräuchliche Füllkörper weisen die Form von Sattelkörpern, Stäbchen, Spiralen und Raschigringen auf. Im erfindungsgemäßen Verfahren ist es zweckmäßig, solche Füllkörper für die Festbettelektrode zu verwenden, welche einerseits eine möglichst hohe volumenspezifische Oberfläche aufweisen, andererseits zu keinem zu hohen Druckverlust innerhalb des Festbetts führen. Partikel mit einem Durchmesser im Bereich zwischen 2 und 5 mm werden besonders bevorzugt.

Die Form der Gegenelektrode richtet sich im wesentlichen nach der Struktur der Elektrolysezelle. Demgemäß können Gegenelektroden in Form eines Bleches, eines Netzes oder Gitters sowie in Form eines Stabes verwendet werden.

Der Separator zwischen den beiden Elektroden der Elektrolysezelle - mindestens ein Elektrodenraum wird durch die Festbettelektrode zumindest teilweise ausgefüllt - kann aus einem mechanischen Trennsystem aus beispielsweise porösem Kunststoff oder Keramik oder aus einer Ionenaustauschermembran bestehen. Ein Separator aus einer Ionenaustauschermembran wird besonders bevorzugt. Im allgemeinen kommt eine Kationenaustauschermembran zum Einsatz. Zur Reinigung von Chlor als Verunreinigung enthaltenden Abgasen sind Kationenaustauschermembranen auf der Basis aliphatischer perfluorierter Polyethersulfonsäuren besonders geeignet. Die Ionenaustauschermembran wird vorzugsweise in Form einer Folie oder in Form einer auf ein poröses Trägermaterial aufgebrachten sehr dünnen Membran verwendet.

Katholyt und Anolyt müssen eine ausreichende Leitfähigkeit aufweisen. Es können wäßrige Säuren, Basen oder wäßrige Salzlösungen verwendet werden. Vorzugsweise werden sowohl als Katholyt als auch als Anolyt wäßrige Säuren verwendet. Im Falle der Reinigung eines Gases von darin enthaltendem Chlor durch Reduktion desselben unter Verwendung einer Festbettkathode wird vorzugsweise wäßrige Salzsäure verwendet; durch das erfindungsgemäße Verfahren wird eine verwertbare konzentriertere Salzsäurelösung erhalten.

Zum Betrieb der Elektrolyse wird ein Strom angelegt und die Stromstärke erhöht, bis eine wirksame Spannung erreicht ist. Üblicherweise wird bei einem Strom im Bereich von 3 bis 20 A, insbesondere 3 bis 10 A, und einer Spannung im Bereich von 2 bis 6 V elektrolysiert. Die wirksame Stromdichte und das Potential nehmen mit zunehmender Bettiefe ab. Der Fachmann wird demgemäß die optimale Bettiefe durch orientierende Versuche ermitteln.

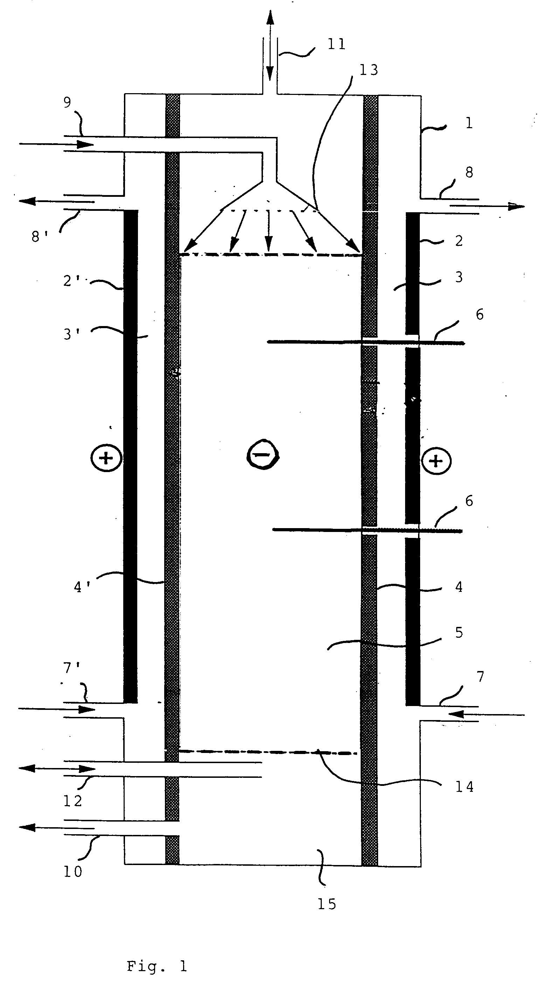

Das erfindungsgemäße Verfahren läßt sich in bevorzugter Weise zur Abtrennung von Chlor aus Gasen in einer Elektrolysezelle gemäß Figur 1 verwenden. Dargestellt ist schematisch ein Längsschnitt durch die Zelle. Hierin bedeuten: Elektrolysezelle (1); Anode (2 und 2'); Anodenraum (3 und 3'); Kationenaustauschermembran (4 und 4'); Festbettkathode (5); Kontaktierstäbe (6); Anolytzufluß (7 und 7'); Anolytabfluß (8 und 8'); Katholytzufluß (9); Katholytabfluß (10); Gaseinlaß bzw. -auslaß (11 und 12); Berieselungsverteiler (13); gelochte Trägerplatte (14); Katholytsammelraum (15).

Die Figuren 2a bis 2d zeigen in schematischer Form vier verschiedene Zellkonfigurationen mit einer Festbettkathode im Querschnitt (Draufsicht), wie sie in den Beispielen zum Einsatz kamen: Die Zelle (1) Z 1 in Figur 2a enthält einen Kathodenraum mit einer Festbettkathode (5), ein Diaphragma (4), einen Anodenraum (3), eine Anode (2) und Ti-Stäbe (6) zur Kontaktierung. Die Zelle Z 2 in Figur 2b entspricht Z 1, enthält aber zur Kontaktierung eine Platinfolie (6f). Die Zelle Z 3 in Figur 2c enthält einen Kathodenraum mit der Festbettkathode (5), zwei gegenüberliegende Anodenräume (3) und (3') mit den Anoden (2) und (2') und Diaphragmen (4) und (4') und Ti-Stäbe (6) zur Kontaktierung des Festbetts. Die Zelle Z 4 in Figur 2d entspricht jener der Zelle Z 3, jedoch enthält sie zur Kontaktierung anstelle der Kontaktierstäbe in der Mitte der Festbettkathode parallel zu den Anodenräumen ein Ti-Gitter (6g).

Vorteile des erfindungsgemäßen Verfahrens sind der gegenüber dem vorbekannten Verfahren wesentlich höhere Reinigungsgrad, die einfache Handhabung der als Rieselbett betriebenen Festbettelektrode, der geringe Druckverlust und damit geringere Energiebedarf. Ein weiterer Vorteil ist, daß das Verhältnis des Volumenstroms des zu reinigenden Gases zu der über das Festbett rieselnden, als Elektrolyt und Aosorptionsmittel wirksamen Waschlösung gegenüber dem vorbekannten Verfahren gesteigert werden und damit die Raum-Zeit-Ausbeute erhöht werden konnte.

Anhand der Beispiele wird die Erfindung weiter erläutert.

### Beispiele

Untersucht wurde die Reinigung eines Chlor als Verunreinigung enthaltenden Gases.

Die Reinigung erfolgte unter Verwendung von Elektrolysezellen mit einer Zellstruktur Z 1, Z 2, Z 3 und Z 4 gemäß den Figuren 2a bis 2d. Der Zellquerschnitt betrug 37,8 cm² (Z 1, Z 2 und Z 3) beziehungsweise 31,5 cm² und 60 cm² (Z 4). Als Festbettkathode diente eine Schüttung aus Graphitpartikeln mit der bei den Versuchen angegebenen Partikelgröße beziehungsweise volumenspezifischen Oberfläche. Die Höhe der Schüttung lag zwischen 31,5 und 42 cm. Zur Kontaktierung wurden Titanstäbe (Z 1 und Z 3), eine Pt-Folie (Z 3) sowie ein Titangitter (Z 4) verwendet. Als Diaphragma diente jeweils eine handelsübliche Kationenaustauschermembran (Nafion-Membran). Als Anode diente ein Platinblech. Als Katholyt wurde eine wäßrige Salzsäure (0,5 mol/l), als Anolyt eine wäßrige H₂SO₄-Lösung (0,5 mol/l) eingesetzt. Elektrolysiert wurde mit einem Strom zwischen 3 und 10 A. Der Katholytstrom (l/h) beziehungsweise die Berieselungsdichte (m³/m²·h) (= Katholytstrom pro Querschnittsfläche des Betts) sowie der Gasstrom (l/h) beziehungsweise die Gasflußdichte (m³/m²·h) und die Restkonzentration an Chlor beziehungsweise der Abreicherungsgrad lassen sich den Tabellen entnehmen.

### Beispiele 1 bis 4

Cl₂-Gehalt im Prüfgas 0,102 Vol.-%;
Füllkörper: Graphitpartikel d = ca. 3 mm; Zelle Z 1;
Schütthöhe 42 cm;
Temperatur: ca. 20 °C;
Gegenstrom: Beispiele 1, 2 und 4; Gleichstrom: Beispiel 3.

**Tabelle 1**

| Beispiel Nr. | 1 | 2 | 3 | 4 |
|---|---|---|---|---|
| Strom (A) | 10 | 10 | | |
| Spannung (V) | 5,3 | 5,1 | Strom 10 A | Strom 10 A |
| Gasvolumenstrom (l/h) | 300 | 300 | 238 | 238 |
| Katholytstrom (l/h) | 30,2 | 30,2 | 30,2 | 30,2 |
| Berieselungsdichte (m³/m²·h) | 8,0 | 8,0 | 8,0 | 8,0 |
| Cl₂-Gehalt (mg/m³) (nach Reinigung) | 0 | 2 | | |
| Cl₂-Abreicherung (%) | 100 | 99,92 | 99,48 | 100 |
| Bemerkung | | | Gleichstrom | Gegenstrom |

Die Beispiele 1 und 2 zeigen die durch die Rieselbettfahrweise ermöglichte nicht vorhersehbare praktisch quantitative Abreicherung an Chlor.

Der Vergleich der Beispiele 3 und 4 zeigt, daß die Gegenstromfahrweise bezüglich des Abreicherungsgrades wirkungsvoller ist die Gleichstromfahrweise.

### Beispiele 5 und 6

Die Beispiele 5 und 6 - siehe Tabelle 2 - verdeutlichen den Einfluß der volumenspezifischen Oberfläche Ov (m²/m³) der Füllkörper (näherungsweise ermittelt: Ov = 6/dm; dm = mittlerer Teilchendurchmesser).
Berieselungsdichte: 8 m³/m²·h;
Gasflußdichte: 168 m³/m²·h;
Zelle: Z 4, Querschnitt 60 cm², Höhe 39 cm
Prüfgaskonzentration: 0,1 Vol.-% Cl₂
Strom: 10 A; Gegenstrom.

**Tabelle 2**

| Beispiel | 5 | 6 |
|---|---|---|
| Füllkörper: Ov | 1320 | 1950 |
| Reinigungsgrad (%) | 99,00 | 99,88 |

Der Vergleich zeigt, daß bei der erfindungsgemäßen Rieselbettfahrweise mit Partikeln mit höherer volumenspezifischer Oberfläche ein höherer Reinigungsgrad erzielt wird.

### Beispiele 7 bis 10

Mit den unterschiedlichen Zellkonfigurationen Z 1 bis Z 4 (siehe Figur 2a bis 2d) wurde der Abreicherungsgrad an Cl₂ in Abhängigkeit von der Gasflußdichte (m³/m²·h) bestimmt.
Füllkörper (Graphit) mit dm = ca. 3 mm;
Prüfgaskonzentration 0,1 Vol.-% Cl₂;
Berieselungsdichte 8 bis 12 m³/m²·h;
Strom 10 A.

Die Ergebnisse folgen aus Tabelle 3. Die Zellkonfigurationen Z 3 und insbesondere Z 4 zeigten eine unerwartet hohe Effektivität bis zu hohen Gasflußdichten (Volumenstrom pro Querschnitt).

**Tabelle 3**

| Gasflußdichte (m³/m²·h) | 79 | 95 | 133 | 145 | 162 | 179 | 196 | 214 | 320 | 364 |
|---|---|---|---|---|---|---|---|---|---|---|
| Abreicherung in % in Zelle | | | | | | | | | | |
| Z 1 | 99,96 | 99,52 | 93,89 | | | | | | | |
| Z 2 | | 99,97 | | 99,28 | | | | | | |
| Z 3 | | 100 | | | 100 | 99,94 | 99,56 | | | |
| Z 4 | | | 100 | | | 100 | | 99,96 | 99,94 | 99,92 |

## Patentansprüche

1. Verfahren zur elektrolytischen Entfernung einer Verunreinigung aus Gasen, wobei das Gas und ein flüssiger Elektrolyt im Gleich- oder Gegenstrom über eine Festbettelektrode einer Elektrolysezelle, welche eine durch einen Separator von der Festbettelektrode getrennte Gegenelektrode und Gegenelektrodenraum aufweist, geführt werden und die Verunreinigung bei einer wirksamen Zellspannung elektrochemisch umgewandelt wird,
dadurch gekennzeichnet,
daß man die Festbettelektrode als Rieselbettreaktor betreibt, wobei man die Berieselungsdichte und die entgegenströmende Menge Gas derart aufeinander abstimmt, daß es zu keiner Flutung kommt.

2. Verfahren nach Anspruch 1,
dadurch gekennzeichnet,
daß man ein mit Chlor verunreinigtes Gas unter Verwendung einer Elektrolysezelle mit einer Festbettkathode und wäßriger Salzsäure als Katholyt reinigt.

3. Verfahren nach Anspruch 1 oder 2,
dadurch gekennzeichnet,
daß man eine Elektroysezelle verwendet, welche an zwei gegenüberliegenden Längsseiten einer rechteckigen Festbettelektrode je eine durch ein Diaphragma abgetrennte Gegenelektrode mit Gegenelektrodenraum aufweist.

4. Verfahren nach Anspruch 3,
dadurch gekennzeichnet,
daß innerhalb der Festbettelektrode und im wesentlichen parallel zu den einander gegenüberliegenden Gegenelektroden ein Gitter aus einem unter Elektrolysebedingungen stabilen Metall zur Kontaktierung angeordnet ist.

## Claims

1. Process for the electrolytic removal of a contaminant from gases, wherein the gas and a liquid electrolyte are passed co- or counter-currently through a fixed bed electrode of an electrolysis cell, which has a counterelectrode and counterelectrode compartment separated from the fixed bed electrode by a separator, and the contaminant is electrochemically converted at an effective cell voltage,
characterised in that
the fixed bed electrode is operated as a trickle bed reactor, wherein the trickle density and counter-current quantity of gas are adjusted relative to each other in such a manner that no flooding occurs.

2. Process according to claim 1,
characterised in that
a gas contaminated with chlorine is purified using an electrolysis cell with a fixed bed cathode and aqueous hydrochloric acid as the catholyte.

3. Process according to claim 1 or 2,
characterised in that
an electrolysis cell is used which, on each of two opposing longitudinal sides of a rectangular fixed bed electrode, has a counterelectrode with a counterelectrode compartment separated by a diaphragm.

4. Process according to claim 3,
characterised in that
a grid made from a metal stable under electrolysis conditions is arranged within the fixed bed electrode and substantially parallel to the opposing counterelectrodes in order to provide electrical contact.

## Revendications

1. Procédé d'élimination électrolytique d'une impureté dans des gaz, le gaz et un électrolyte liquide étant conduits dans le même sens ou à contre-courant sur une électrode à lit fixe d'une cellule d'électrolyse qui présente une contre-électrode et un espace de contre-électrode séparé de l'électrode à lit fixe par un séparateur, et l'impureté étant transformée par un moyen électrochimique à une tension cellulaire efficace,
caractérisé en ce qu'
on fait fonctionner l'électrode à lit fixe sous la forme d'un réacteur à lit à écoulement, la densité de ruissellement et la quantité de gaz en courant opposé étant déterminées l'une par rapport à l'autre de manière qu'il n'y ait pas de mise en eau.

2. Procédé selon la revendication 1,
caractérisé en ce qu'
on purifie un gaz comportant du chlore comme impureté avec utilisation d'une cellule d'électrolyse comportant une cathode à lit fixe et de l'acide chlorhydrique aqueux comme catholyte.

3. Procédé selon la revendication 1 ou 2,
caractérisé en ce qu'
on utilise une cellule d'électrolyse qui présente sur deux côtés longitudinaux opposés d'une électrode à lit fixe rectangulaire à chaque fois une contre-électrode avec un espace de contre-électrode, séparé par un diaphragme.

4. Procédé selon la revendication 3,
caractérisé en ce qu'
à l'intérieur de l'électrode à lit fixe et essentiellement parallèle aux contre-électrodes opposées l'une à l'autre on dispose un grillage fait d'un métal stable dans les conditions de l'électrolyse, aux fins d'établissement d'un contact.
